(19) Europäisches Patentamt
European Patent Office
Office européen des brevets

(11) EP 4 773 204 A1

(12) EUROPEAN PATENT APPLICATION
published in accordance with Art. 153(4) EPC

(43) Date of publication:
08.07.2026 Bulletin 2026/28

(21) Application number: 25854627.4

(22) Date of filing: 08.08.2025

(51) International Patent Classification (IPC):
***H01M 4/13*** (2010.01) ***H01M 4/62*** (2006.01)
***H01M 4/131*** (2010.01) ***H01M 4/136*** (2010.01)
***H01M 10/052*** (2010.01) ***H01M 4/02*** (2006.01)

(52) Cooperative Patent Classification (CPC):
**H01M 4/02; H01M 4/13; H01M 4/131; H01M 4/136; H01M 4/62; H01M 10/052;** Y02E 60/10

(86) International application number:
**PCT/KR2025/012059**

(87) International publication number:
**WO 2026/038820 (19.02.2026 Gazette 2026/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.08.2024 KR 20240109460**

(71) Applicant: **LG Energy Solution, Ltd.**
**Seoul 07335 (KR)**

(72) Inventors:
- **LEE, Taek Yong**
  **Daejeon 34122 (KR)**
- **KIM, Ga Yeon**
  **Daejeon 34122 (KR)**
- **JEONG, Ji Won**
  **Daejeon 34122 (KR)**
- **LEE, Je Gwon**
  **Daejeon 34122 (KR)**
- **LEE, Je Gon**
  **Daejeon 34122 (KR)**

(74) Representative: **Hoffmann Eitle**
**Patent- und Rechtsanwälte PartmbB**
**Arabellastraße 30**
**81925 München (DE)**

# (54) ELECTRODE AND SECONDARY BATTERY COMPRISING SAME

(57) The present invention relates to an electrode including an electrode active material layer including an electrode active material, a conductive material, and a binder, wherein the electrode active material has a specific surface area of 10 $m^2/g$ to 50 $m^2/g$, and the electrode active material layer has an A, defined by factors including input amounts of the electrode active material and the conductive material in the electrode, an loading amount and a specific surface area of the electrode active material, and a specific surface area and an average particle diameter of the conductive material, of 0.70 $cm^2\mu m/mg$ or greater, and may achieve an electrode having a large loading amount and low resistance, thereby providing a secondary battery having excellent capacity characteristics and improved resistance characteristics.



Processed by Luminess, 75001 PARIS (FR)

## Description

## TECHNICAL FIELD

The present invention relates to an electrode and a secondary battery including the same, and more particularly, to an electrode having excellent appearance characteristics and a secondary battery including the same.

## BACKGROUND ART

With a rapid increase in the use of fossil fuels, there is a growing demand for the use of alternative energy or clean energy, and in response, fields of power generation and energy storage using electrochemical reactions have been most actively studied.

Currently, secondary batteries are a representative example of an electrochemical element that utilizes electrochemical energy, and the extent of the usage thereof is increasing. Lately, technological advancements and increasing demand for portable devices such as portable computers, portable phones, and cameras have driven a significant surge in the demand for secondary batteries as an energy source, and in particular, extensive research has been conducted on high energy density, that is, high capacity, lithium secondary batteries which are now commercially available and widely used.

In addition, in the field of secondary battery technology, there is a continuous demand for the development of batteries that offer high energy density and excellent quick charging performance to enable the advancement of energy storage devices. In particular, with the increasing demand for high capacity energy storage devices such as electric vehicles (EVs), the importance of quick charging technology, which allows charging at a high power within a short time, is being highlighted to maximize user convenience. In this context, the development of secondary batteries that ensure maximized energy density and stability during quick charging is emerging as the latest technological trend.

However, the challenge is that secondary batteries require a drying process in the manufacture of electrodes, during which defects from cracks or wrinkles frequently arise, and this issue is particularly evident when using active materials with a large specific surface area or in high-loading electrodes. These defects in the electrode surface morphology may result in lithium salt precipitation in batteries, potentially causing a reduction in lifespan and an increase in cell resistance.

Accordingly, research is being conducted to overcome the issues described above by improving appearance characteristics and enhancing cell lifespan and resistance through diverse approaches.

## DISCLOSURE OF THE INVENTION

## TECHNICAL PROBLEM

An aspect of the present invention provides an electrode that reduces the occurrence of surface cracks and wrinkles by controlling specific surface area, particle diameter, and loading amount of an electrode active material and a conductive material included in an electrode active material layer.

Another aspect of the present invention provides a secondary battery exhibiting high capacity by including the electrode having excellent appearance characteristics while exhibiting excellent resistance characteristics due to suppressed lithium salt precipitation.

## TECHNICAL SOLUTION

[1] According to an aspect of the present invention, provided is an electrode including an electrode active material layer including an electrode active material, a conductive material, and a binder, wherein the electrode active material layer has an A, defined by Equation 1 below, of 0.70 cm$^2$μm/mg or greater, and the electrode active material has a specific surface area of 10 m$^2$/g to 50 m$^2$/g.

[Equation 1]

$$A = [(W_C \times S_C \times D_C) / (W_{AM} \times S_{AM} \times L_{AM})] \times 100$$

In Equation 1 above, $W_C$ and $W_{AM}$ are respective weight percentages (wt%) of the conductive material and the electrode active material, with respect to a total content of the electrode active material, the conductive material, and the binder, $S_C$ and $S_{AM}$ are respective BET specific surface areas ($m^2/g$) of the conductive material and the electrode active material, $D_C$ is an average particle diameter (μm) of the conductive material, and $L_{AM}$ is a loading amount ($mg/cm^2$) of the electrode active material.

[2] The present invention provides the electrode according to [1] above, wherein the A may be 0.70 $cm^2\mu m/mg$ to 8.00 $cm^2\mu m/mg$.

[3] The present invention provides the electrode according to [1] and/or [2] above, wherein the conductive material may have a specific surface area of 50 $m^2/g$ to 250 $m^2/g$.

[4] The present invention provides the electrode according to at least one of [1] to [3] above, wherein the conductive material may have an average particle diameter $D_{50}$ of 0.1 μm to 4.0 μm.

[5] The present invention provides the electrode according to at least one of [1] to [4] above, wherein the conductive material may include a point-type conductive material.

[6] The present invention provides the electrode according to at least one of [1] to [5] above, wherein the electrode active material may include at least one selected from the group consisting of a lithium manganese-based oxide, a lithium cobalt-based oxide, a lithium nickel-based oxide, a lithium composite transition metal oxide, and a lithium iron phosphate-based compound.

[7] The present invention provides the electrode according to at least one of [1] to [6] above, wherein the electrode active material may include a lithium iron phosphate-based compound.

[8] The present invention provides the electrode according to at least one of [1] to [7] above, wherein the electrode active material may be provided in an amount of 93.0 wt% to 99.0 wt% with respect to a total weight of the electrode active material layer.

[9] The present invention provides the electrode according to at least one of [1] to [8] above, wherein the conductive material may be provided in an amount of 0.5 wt% to 5.0 wt% with respect to a total weight of the electrode active material layer.

[10] According to another aspect of the present invention, provided is a secondary battery including the electrode according to at least one of [1] to [9] above.

[11] The present invention provides the secondary battery according to [10] above, wherein the electrode may be a positive electrode.

## ADVANTAGEOUS EFFECTS

An electrode according to the present specification appropriately controls a specific surface area and a loading amount of an electrode active material and appropriately controls a specific surface area and an average particle diameter of a conductive material, resulting in an extremely low probability of cracks or wrinkles forming on a surface, and may thus have excellent appearance characteristics along with a large loading amount and low intrinsic electrode resistance.

In addition, a secondary battery according to the present specification includes the electrode described above, and thus offers the benefit that superior capacity characteristics may be achieved and resistance characteristics may be enhanced as issues related to lithium salt precipitation are resolved.

## MODE FOR CARRYING OUT THE INVENTION

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Herein, it will be further understood that the terms "include", "comprise", or "have" specify the presence of stated features, numbers, steps, elements, or combinations thereof, but do not preclude the presence or addition of one or more other features, numbers, steps, elements, or combinations thereof.

Herein, the term "$D_{50}$" indicates a particle size with respect to 50% in the volume accumulated particle size distribution of positive electrode active material powder or conductive material in a dispersion state. The average particle diameter $D_{50}$ may be measured using a laser diffraction method. For example, the average particle diameter $D_{50}$ may be measured in a way that the positive electrode active material powder is dispersed in a dispersion medium, the dispersion medium is introduced into a commercial laser diffraction particle size measurement instrument (e.g., Microtrac MT 3000) and irradiated with ultrasonic waves having a frequency of about 28 kHz and an output of 60 W to obtain a volume accumulated particle size distribution graph, and the particle size at 50% of the volume accumulation is calculated.

Herein, the term "specific surface area ($m^2/g$)" is measured through a BET method, and specifically may be calculated from an amount of nitrogen gas adsorbed at a liquid nitrogen temperature (77 K) using BELSORP-mino II from BEL JAPAN, INC.

An electrode and a secondary battery described herein may each include at least one of the technical components, which will be described later, and may include any combination of technically feasible components among the following technical components.

## Electrode

In an aspect, an electrode includes an electrode active material layer including an electrode active material, a conductive material, and a binder, where the electrode active material layer has an A, defined by factors including physical properties of the active material and the conductive material, of 0.7 $cm^2\mu m/mg$ or greater, and the electrode active material has a specific surface area of 10 $m^2/g$ to 50 $m^2/g$.

A process of manufacturing an electrode of a secondary battery involves applying an electrode slurry including electrode materials onto a current collector, followed by drying. However, this drying process may cause pinholes, cracks, and wrinkles to form on an electrode surface as a solvent evaporates. These defects may subsequently lead to lithium salt precipitation on the surface or act as resistance, which may degrade output or quick charging performance.

The causes for the formation of cracks and wrinkles on the electrode surface may vary, but a primary cause is believed to be an increase in spacing between active materials due to solvent evaporation. The formation of cracks due to the increased spacing between active materials may be attributed to the fact that a conductive material is not properly disposed in the pores between active materials. For the conductive material to be properly disposed in the pores between active materials or the surface of active materials, an appropriate relationship may need to be established between the number and length characteristics of the conductive material and the number characteristics of the active material.

This process of crack formation may begin from a process of slurry preparation. For electrode active materials having a large particle diameter and a relatively small specific surface area, solid content may be easily increased, and no particular issues arise during drying. However, when using electrode active materials having a large specific surface area and a small particle diameter, the pore size is also small, which may easily cause spacing between electrode active materials during drying. This may lead to crack formation and dispersibility issues due to the need for a greater amount of conductive material.

Due to the issues described above, when using electrode active materials having a large specific surface area and a small particle diameter, increasing solid content is extremely difficult due to dispersibility issues. This inevitably leads to an increased volume of solvent requiring evaporation. Accordingly, the drying process may be performed under extremely harsh conditions. Since the issues described above are compounded by the issues arising from the harsh drying process, the likelihood of crack formation increases. Consequently, there is a substantial need for controlling the content, loading amount, and specific surface area of the active material, as well as the specific surface area and particle diameter of the conductive material.

Therefore, the inventors of the present invention have defined A, which is defined by Equation 1 above, using the physical properties of the active material and the conductive material as factors, based on the fact that when the relationship between the above properties is appropriately formed, the conductive material is evenly distributed on the surface of the active material, thereby suppressing an increase in the spacing between active materials caused by solvent evaporation during the drying process, and thus preventing the formation of cracks or wrinkles on the electrode surface.

### *A defined by Equation 1*

In an aspect, the electrode active material layer has an A, defined by Equation 1 below, of 0.70 $cm^2\mu m/mg$ or greater.

[Equation 1]

$$A = [(W_C \times S_C \times D_C) / (W_{AM} \times S_{AM} \times L_{AM})] \times 100$$

In Equation 1 above, $W_C$ and $W_{AM}$ are respective weight percentages (wt%) of the conductive material and the electrode active material, with respect to a total content of the electrode active material, the conductive material, and the binder, $S_C$ and $S_{AM}$ are respective BET specific surface areas ($m^2/g$) of the conductive material and the electrode active material, $D_C$ is an average particle diameter ($\mu m$) of the conductive material, and $L_{AM}$ is a loading amount ($mg/cm^2$) of the electrode active material.

As may be inferred from the unit, the "A" may indicate the length or volume of the conductive material in contact with the surface of the electrode active material per unit weight of the electrode active material. That is, a greater value of "A" indicates a greater proportion of the conductive material in good contact with the surface of the active material, suggesting the formation of an excellent conductive network and the prevention of cracks or wrinkles caused by solvent evaporation during drying. Accordingly, to achieve the above-described effects, the A needs to satisfy 0.70 $cm^2\mu m/mg$ or greater, and may preferably be 0.75 $cm^2\mu m/mg$ or greater, 0.79 $cm^2\mu m/mg$ or greater, 0.85 $cm^2\mu m/mg$ or greater, 0.86 $cm^2\mu m/mg$ or greater, 0.95 $cm^2\mu m/mg$ or greater, 1.00 $cm^2\mu m/mg$ or greater, 1.03 $cm^2\mu m/mg$ or greater, 1.10 $cm^2\mu m/mg$ or greater, 1.13 $cm^2\mu m/mg$ or greater, or 1.20 $cm^2\mu m/mg$ or greater. The condition where the A is less than 0.70 $cm^2\mu m/mg$ may indicate that the specific surface area of the conductive material is too small compared to the average particle diameter, resulting in an insufficient proportion to cover the active material surface, or that the rolling pressure is too high, leading to an excessive loading amount of the active material and a collapse of the internal structure, or that the specific surface area of the active material is relatively large, inducing a risk of side reactions with an electrolyte.

A greater value of A may indicate superior conductivity and excellent appearance characteristics. However, an excessive increase in the value of A suggests that the conductive material overly covers the active material surface or that the conductive material fills pores in the electrode. In this case, a negative effect where the cycle life is degraded outweighs the benefit of preventing cracks or wrinkles in the electrode may occur, accompanied by capacity degradation due to a reduction in the active material amount. Considering this, the A may preferably be 8.00 $cm^2\mu m/mg$ or less, 7.75 $cm^2\mu m/mg$ or less, 7.69 $cm^2\mu m/mg$ or less, 7.50 $cm^2\mu m/mg$ or less, 7.30 $cm^2\mu m/mg$ or less, 7.00 $cm^2\mu m/mg$ or less, 6.80 $cm^2\mu m/mg$ or less, 6.50 $cm^2\mu m/mg$ or less, 6.30 $cm^2\mu m/mg$ or less, or 6.00 $cm^2\mu m/mg$ or less.

In order for the conductive material to be in good contact with the surface of the electrode active material within the electrode active material layer, the number characteristics (specific surface area) of the electrode active material and the conductive material need to be appropriately controlled, and the length characteristics (average particle diameter) of the conductive material need to be considered together with the number characteristics.

In this respect, as in Equation 1 above, the specific surface area and loading amount of the electrode active material, and the specific surface area and average particle diameter of the conductive material are included as factors, with the content of both the electrode active material and the conductive material being considered together. By adjusting the relationship among these factors to satisfy the above-described range for the value of A, the formation of cracks and wrinkles on the electrode may be prevented, thereby inhibiting lifespan degradation caused by lithium salt precipitation or output reduction caused by an increase in cell resistance.

That is, the specific surface area and loading amount of the electrode active material, and the specific surface area and average particle diameter of the conductive material do not hold individual technical significance. Rather, these factors provide the technical meaning of guaranteeing excellent appearance characteristics for an electrode to be manufactured by appropriately selecting the specific surface area and average particle diameter of the conductive material to prevent cracks or wrinkles on the electrode, and subsequently selecting the corresponding electrode active material. Such an electrode may provide a secondary battery exhibiting enhanced lifespan performance and resistance characteristics.

*Electrode active material*

In an aspect, the electrode active material layer includes an electrode active material, a conductive material, and a binder. The electrode active material may be a positive electrode active material or a negative electrode active material.

The electrode active material has a specific surface area, which is one of the factors defining the A, of 10 $m^2/g$ to 50 $m^2/g$. The specific surface area may preferably be 12 $m^2/g$ or greater, 14 $m^2/g$ or greater, 16 $m^2/g$ or greater, 18 $m^2/g$ or greater, or 20 $m^2/g$ or greater. In addition, the specific surface area may be 45 $m^2/g$ or less, 43 $m^2/g$ or less, 40 $m^2/g$ or less, 35 $m^2/g$ or less, 33 $m^2/g$ or less, or 30 $m^2/g$ or less.

When the specific surface area of the electrode active material is as described above, cracks formed on the electrode surface or side reactions with an electrolyte, which are projected from the value of A defined by Equation 1 above, may be optimally evaluated. When the specific surface area of the electrode active material is small, the need for Equation 1 above is significantly reduced. This is because the issues previously described for active materials having a large specific surface area such as active materials having a large specific surface area of about 10 $m^2/g$ or greater are entirely avoided during slurry preparation and drying processes.

Conversely, applying an electrode active material having a specific surface area within the above range may reduce restrictions when selecting the specific surface area and average particle diameter of the conductive material, and thereby providing an environment where the conductive material may be evenly distributed on the active material surface. In addition, side reactions with an electrolyte may be appropriately controlled while the mobility (kinetic) of lithium ions at an interface between the positive electrode active material and the electrolyte may be achieved to a certain level or greater.

In addition, the electrode active material may have a loading amount of 18 $mg/cm^2$ to 30 $mg/cm^2$, may preferably have a loading amount of 19 $mg/cm^2$ or greater, 20 $mg/cm^2$ or greater, and may also have a loading amount of 28 $mg/cm^2$ or less, 26 $mg/cm^2$ or less, or 24 $mg/cm^2$ or less. The loading amount may be at a level intended to secure a minimum capacity, prevent electrode damage during a rolling process, and prevent an electrode from becoming too thick or porosity from becoming too high, and it is desirable that the loading amount be controlled within the above range.

The electrode active material may be a positive electrode active material, and the positive electrode active material may include at least one selected from the group consisting of a lithium manganese-based oxide, a lithium cobalt-based oxide, a lithium nickel-based oxide, a lithium composite transition metal oxide, and a lithium iron phosphate-based compound.

The lithium composite transition metal oxide may include, for example, lithium-nickel-manganese-based oxide (e.g., $LiNi_{1-Y}Mn_YO_2$ (where 0<Y<1), $LiMn_{2-Z}Ni_ZO_4$ (where 0<Z<2), etc.), lithium-nickel-cobalt-based oxide (e.g., $LiNi_{1-Y1}Co_{Y1}O_2$ (where 0<Y1<1), etc.), lithium-manganese-cobalt-based oxide (e.g., $LiCo_{1-Y2}Mn_{Y2}O_2$ (where 0<Y2<1), $LiMn_{2-Z1}Co_{Z1}O_4$ (where 0<Z1<2), etc.), lithium-nickel-manganese-cobalt-based oxide (e.g., $Li(Ni_pCo_qMn_r)O_2$ (where 0<p<1, 0<q<1, 0<r<1, p+q+r=1) or $Li(Ni_{p1}Co_{q1}Mn_{r1})O_4$ (where 0<p1< 2, 0<q1<2, 0<r1<2, p1+q1+r1=2, etc.), or lithium-nickel-cobalt-transition metal (M) oxide (e.g., $Li(Ni_{p2}Co_{q2}Mn_{r2}M_{s2})O_2$ (where M is selected from the group consisting of Al, Fe, V, Cr, Ti, Ta, Mg, and Mo, and p2, q2, r2, and s2 are each an atomic fraction of independent elements, where 0<p2<1, 0<q2<1, 0<r2<1, 0<s2<1, p2+q2+r2+s2=1) . The lithium iron phosphate-based compound may be, for example, a compound represented by $Li_{1+a}Fe_{1-x}M_x(PO_{4-b})X_b$ (where M is at least one selected from Al, Mg, and Ti, X is at least one selected from F, S, and N, and $-0.5 \leq a \leq 0.5$, $0 \leq x \leq 0.5$, $0 \leq b \leq 0.1$). The positive electrode active material may include at least one compound selected from the compounds described above.

The positive electrode active material may preferably include a lithium iron phosphate-based compound. When the positive electrode active material is a lithium iron phosphate-based compound, the benefit of manufacturing a crack-free electrode with high reproducibility by utilizing the value of A may be expected. The lithium iron phosphate-based compound is an active material having a large specific surface area and a small particle diameter, and also is an active material having low electrical conductivity, requiring a greater amount of conductive material, and may thus be an electrode active material with a significantly high probability of crack formation due to difficulties in increasing solid content, difficulties in dispersion, and widening of spacing between active materials. Accordingly, the positive electrode active material may preferably include a lithium iron phosphate-based compound.

The electrode active material may be a negative electrode active material, and the negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al, and Sn or alloys of lithium and these metals may be used.

One selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0 \leq x \leq 1$), $Li_xWO_2$ ($0 \leq x \leq 1$), and $Sn_xMe_{1-x}Me'_yO_z$ (Me:Mn, Fe, Pb, or Ge; Me':Al, B, P, Si, Groups I, II, and III elements of the periodic table, or halogen; $0<x \leq 1$; $1 \leq y \leq 3$; $1 \leq z \leq 8$) may be used as the metal composite oxide.

The material, which may be doped and undoped with lithium, may include Si, $SiO_x$ ($0<x \leq 2$), a Si-Y alloy (where Y is an element selected from the group consisting of alkali metal, alkaline earth metal, a Group 13 element, a Group 14 element, transition metal, a rare earth element, and a combination thereof, and is not Si), Sn, $SnO_2$, and Sn-Y (where Y is an element selected from the group consisting of alkali metal, alkaline earth metal, a Group 13 element, a Group 14 element, transition metal, a rare earth element, and a combination thereof, and is not Sn), and a mixture of $SiO_2$ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, and lithium vanadium oxide.

The electrode active material may be included in an amount of 85 wt% to 99 wt%, preferably 88 wt% or greater, 90 wt% or greater, 91 wt% or greater, or 93 wt% or greater, and may also be included in an amount of 98.5 wt% or less, 98 wt% or less, or 97 wt% or less, with respect to a total weight of the electrode active material layer. When the electrode active material is included in the above range, it may be desirable both in terms of increasing capacity and energy density of the electrode and in terms of optimizing the function of the conductive material and the binder as auxiliary materials.

*Conductive material*

In an aspect, the electrode active material layer includes an electrode active material, a conductive material, and a binder. The conductive material may include a line-type conductive material and a point-type conductive material.

The line-type conductive material may include single-walled carbon nanotubes and/or multi-walled carbon nanotubes. Preferably, multi-walled carbon nanotubes are used, in which case a suitable value for the specific surface area and $D_{50}$ may be applied to satisfy the value of A described above.

In addition, the point-type conductive material may include carbon black, and may include, for example, at least one selected from the group consisting of acetylene black, Ketjen black, channel black, furnace black, lamp black, and thermal black.

The conductive material has a great influence on defining A, and it is desirable that the specific surface area be controlled within an appropriate range. Irrespective of the shape of the conductive material, such as a line-type conductive material and a point-type conductive material, when a conductive material that satisfies the specific surface area range below is applied, an electrode that satisfies the range for the value of A may be more easily achieved.

The conductive material may have a specific surface area of 50 $m^2/g$ to 250 $m^2/g$ measured through a BET method, and specifically may be calculated from an amount of nitrogen gas adsorbed at a liquid nitrogen temperature (77 K) using BELSORP-mino II from BEL JAPAN, INC. Preferably, the conductive material may have a specific surface area of 65 $m^2/g$ or greater, 75 $m^2/g$ or greater, 80 $m^2/g$ or greater, 85 $m^2/g$ or greater, 90 $m^2/g$ or greater, 95 $m^2/g$ or greater, or 100 $m^2/g$ or greater, and may also have a specific surface area of 240 $m^2/g$ or less, 230 $m^2/g$ or less, 220 $m^2/g$ or less, 210 $m^2/g$ or less, 205 $m^2/g$ or less, or 200 $m^2/g$ or less.

Similarly to the specific surface area, it is desirable that the average particle diameter of the conductive material be controlled within an appropriate range as an independent factor. Irrespective of the shape of the conductive material, such as a line-type conductive material and a point-type conductive material, when a conductive material that satisfies the average particle diameter range below is applied, an electrode that satisfies the range for the value of A may be more easily achieved.

The conductive material may have an average particle diameter $D_{50}$ of 0.1 $\mu$m to 4.0 $\mu$m, may have an average particle diameter $D_{50}$ of 0.5 $\mu$m or greater, 0.7 $\mu$m or greater, 0.9 $\mu$m or greater, or 1.0 $\mu$m or greater, and may have an average particle diameter $D_{50}$ of 3.5 $\mu$m or less, 3.3 $\mu$m or less, 3.0 $\mu$m or less, 2.8 $\mu$m or less, or 2.6 $\mu$m or less. In this case, the average particle diameter $D_{50}$ of the conductive material may indicate an average particle diameter in a dispersion state in which conductive material powder is dispersed in an organic solvent, and may be measured using a laser diffraction method, representing an average particle diameter at 50% of volume accumulation from a volume accumulated distribution graph obtained from the measurement. In addition, the conductive material dispersion may have a conductive material content of 1 wt% to 20 wt%, preferably 1.5 wt% or greater, 2.0 wt% or greater, and may also have a conductive material content of 15 wt% or less, 12 wt% or less, or 10 wt% or less.

The specific surface area of the conductive material is a property that may represent the number characteristics of the conductive material, and the average particle diameter of the conductive material is a property that may represent the length characteristics of the conductive material. When these two properties are controlled simultaneously, the conductive material may be expected to be well-placed within the pores and on the surface of the active material.

The conductive material may be included in an amount of 0.01 wt% to 6.0 wt% with respect to a total weight of the electrode active material layer. The conductive material may preferably be included in an amount of 0.05 wt% or greater, 0.1 wt% or greater, 0.15 wt% or greater, 0.2 wt% or greater, 0.3 wt% or greater, 0.5 wt% or greater, 0.7 wt% or greater, 0.9 wt% or greater, or 1.0 wt% or greater, and may also be included in an amount of 5.7 wt% or less, 5.5 wt% or less, 5.3 wt% or less, or 5.0 wt% or less. A greater input amount of the conductive material may be beneficial for forming conductive pathways. However, capacity may be reduced due to a decrease in the relative amount of active material. Since adjusting and applying the conductive material within the above range may satisfy an appropriate level of the value of A, it is desirable to apply the conductive material within the range described above.

*Other components of electrode*

In an aspect, the electrode includes a binder. The binder serves to improve the bonding between electrode active material particles and the adhesion between the electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethymetha crylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, polyacrylic acid, and a polymer having hydrogen thereof substituted with Li, Na, or Ca, or various copolymers thereof, and any one thereof or a mixture of two or more thereof may be used. With respect to a total weight of the electrode active material layer, the binder may be included in an amount of 0.1 wt% to 10 wt%, may preferably be included in an amount of 0.3 wt% or greater, 0.5 wt% or greater, 0.7 wt% or greater, or 1.0 wt% or greater, and may also be included in an amount of 9.0 wt% or less, 8.5 wt% or less, 8.0 wt% or less, 7.5 wt% or less, 7.0 wt% or less, or 6.5 wt% or less.

In an aspect, the electrode may further include a current collector, and the electrode active material layer may be disposed on the current collector.

When the electrode is a positive electrode, the current collector may include a highly conductive metal and is not particularly limited as long as the positive electrode active material layer easily adheres thereto and the current collector has no reactivity in the voltage range of a battery. As the positive electrode current collector, for example, stainless steel, aluminum, nickel, titanium, thermally treated carbon, aluminum or stainless steel whose surface has been treated with carbon, nickel, titanium, silver, or the like may be used.
In addition, the current collector may have a thickness of 3 μm to 100 μm, preferably 8 μm to 80 μm, but is not limited thereto. The current collector may have fine irregularities formed on a surface thereof to improve the adhesion of the electrode active material. For example, the current collector may be used in various forms such as a film, a sheet, a foil, a net, a porous body, a foam body, and a non-woven fabric body.
In a case in which the electrode is a negative electrode, the current collector is not particularly limited as long as it has high conductivity without causing changes in batteries, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used.
In addition, the current collector may have a thickness of 3 μm to 100 μm, preferably 8 μm to 80 μm, but is not limited thereto. The current collector may have fine irregularities formed on a surface thereof to improve the adhesion of the electrode active material. For example, the current collector may be used in various forms such as a film, a sheet, a foil, a net, a porous body, a foam body, and a non-woven fabric body.
The current collector may be a metal foil as described above, but a composite current collector having a structure in which a resin is interposed between metal thin films may also be applied, and the thickness of the composite current collector may also be selected within the range described above, and the resin may be a polyester-based resin, a polyolefin-based resin, or a polyacryl-based resin.

## Method for manufacturing electrode

In an aspect, provided is a method for manufacturing an electrode, the method including applying an electrode slurry including an electrode active material, a conductive material, and a binder onto a current collector (S1), and drying and roll pressing the electrode slurry on the current collector (S2), where S1 and S2 are performed such that A defined by Equation 1 below is 0.70 cm$^2$μm/mg or greater, and the electrode active material has a specific surface area of 10 m$^2$/g to 50 m$^2$/g.

[Equation 1]

$$A = [(W_C \times S_C \times D_C) / (W_{AM} \times S_{AM} \times L_{AM})] \times 100$$

In Equation 1 above, $W_C$ and $W_{AM}$ are respective weight percentages (wt%) of the conductive material and the electrode active material, with respect to a total content of the electrode active material, the conductive material, and the binder, $S_C$ and $S_{AM}$ are respective BET specific surface areas (m$^2$/g) of the conductive material and the electrode active material, $D_C$ is an average particle diameter (μm) of the conductive material, and $L_{AM}$ is a loading amount (mg/cm$^2$) of the electrode active material.
Since the description of A defined by Equation 1 above and the description of factors included in A are provided in the description of the electrode, a detailed description thereof will be skipped.
The S1 may involve selecting an electrode active material and a conductive material having appropriate properties to satisfy A, adding the two with a binder to an organic solvent, and then mixing the components.
The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent may dissolve or disperse the positive electrode active material, the conductive material, the binder, and the dispersant in consideration of the applying thickness of the slurry and preparation yield, and thereafter, have a viscosity which may exhibit excellent thickness uniformity upon application for the preparation of the positive electrode.
The S2 may involve adjusting a loading amount of the electrode active material in the electrode active material layer formed by drying and roll pressing the electrode slurry applied onto the current collector of the S1 to a target range, thereby satisfying A.

## Secondary battery

In another aspect, a secondary battery including the electrode is provided, and preferably, the electrode may be a positive electrode.
The secondary battery may include a non-aqueous electrolyte secondary battery including a liquid electrolyte, or an all-solid-state secondary battery including a solid electrolyte, and may also include a lithium secondary battery in which charging and discharging occur through the movement of lithium ions and electrons, or a sodium secondary battery in which charging and discharging occur through the movement of sodium ions and electrons. However, the following description will be given using a lithium secondary battery as an example.

When the secondary battery is a non-aqueous electrolyte secondary battery, the secondary battery includes a positive electrode, a negative electrode positioned to face the positive electrode, a separator interposed between the positive electrode and the negative electrode, and an electrolyte. The electrode is the same as described above, and thus, a detailed description thereof will be skipped, and hereinafter, the other components will only be described.

The secondary battery may further optionally include a battery container accommodating an electrode assembly of the positive electrode, the negative electrode, and the separator, and a sealing member sealing the battery container.

In the secondary battery, a separator is to separate the negative electrode and the positive electrode and to provide a movement path for lithium ions. Any separator may be used without particular limitation as long as it is typically used as a separator in the secondary battery. Particularly, a separator having high moisture-retention ability for an electrolyte as well as low resistance to the movement of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

As the electrolyte, an organic liquid electrolyte, an inorganic liquid electrolyte, a solid polymer electrolyte, a gel-type polymer electrolyte, an inorganic solid electrolyte, a molten-type inorganic electrolyte, or the like that is usable in the manufacture of a secondary battery may be used without particular limitation.

The electrolyte may include an organic solvent and a lithium salt.

As the organic solvent, any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

Any compound may be used as the lithium salt without particular limitation as long as it is a compound capable of providing lithium ions used in secondary batteries. To be specific, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$ $LiN(C_2F_5SO_3)_2$, $LiN(C_2F_5SO_2)_2$, $LiN(CF_3SO_2)_2$, LiCl, LiI, or $LiB(C_2O_4)_2$ may be used. The lithium salt may be preferably used in a concentration range of 0.1 M to 2.0 M. When the concentration of the lithium salt is included within the above range, the electrolyte has suitable conductivity and viscosity and may thus exhibit excellent performance, and lithium ions may effectively move.

In the electrolyte, in order to improve the lifespan characteristics of a battery, suppress the decrease in battery capacity, and improve the discharge capacity of a battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included. In this case, the additive may be included in an amount of 0.1 wt% to 5 wt% with respect to a total weight of the electrolyte.

When the secondary battery is an all-solid-state secondary battery, the battery may include an electrode assembly including a unit cell in which a positive electrode, a solid electrolyte membrane, and a negative electrode are sequentially stacked, and at least one of the positive electrode and the negative electrode may include the electrode current collector according to the present invention described above. The all-solid-state secondary battery includes a solid electrolyte as a main component of the solid electrolyte membrane, but may also include a solid electrolyte in an electrode composite layer of the positive or the negative electrode, and the components of the solid electrolyte and the solid electrolyte membrane included in the electrode composite layer may be the same or different, but it is preferable to use the same components.

In the secondary battery described above, the description of the electrode is the same as described above, and thus the description thereof will be skipped.

As the solid electrolyte, for example, a halide-based solid electrolyte, an oxide-based solid electrolyte, a polymer-based solid electrolyte, or a sulfide-based solid electrolyte may be used, and in particular, a sulfide-based solid electrolyte may be preferably used.

The sulfide-based solid electrolyte may include a solid electrolyte represented by Formula 1 below.

[Formula 1] $Li_xM_yP_zS_vA_w$

In Formula 1 above, x, y, z, v, and w are independently 0 to 7, and may be determined to achieve overall charge neutrality, M is at least one of As, Ge, Ga, Sb, Si, Sn, Al, In, Ti, V, Nb, or Ta, and A is at least one of F, Cl, Br, or I.

The sulfide-based solid electrolyte, as a typical sulfide-based solid electrolyte having an argyrodite structure, may have a cubic phase at high temperatures that exhibits further enhanced ionic conductivity due to high $Li^+$ mobility, and may be stabilized by replacing sulfur with a halogen anion. The halogen element substitution forms vacancies at the Li-site within the argyrodite unit cell, leading to enhanced Li ion conductivity, and this halogen ion substitution allows the cubic structure to be stabilized even at room temperature.

For example, the sulfide-based solid electrolyte may include $Li_2S$-$P_2S_5$, $Li_2S$-$P_2S_5$-LiX (where X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are positive numbers, and Z is one of Ge, Zn, or Ga), $Li_2S$-$GeS_2$, $Li_2S$-$SiS_2$-$Li_3PO_4$, $Li_2S$-$SiS_2$-$Li_pMO_q$ (where p and q are positive numbers, and M is one of P, Si, Ge, B, Al, Ga, or In), or a combination thereof. The solid electrolyte may be composed of one type of material selected from the sulfide-based solid electrolyte materials, or may be composed of two or more types of materials. Preferably, a material including $Li_2S$-$P_2S_5$ may be used. When using a sulfide-based solid electrolyte material including $Li_2S$-$P_2S_5$, a mixing molar ratio of $Li_2S$ and $P_2S_5$ ($Li_2S$:$P_2S_5$) may be selected in a range of, for example, 50:50 to 90:10.

The solid electrolyte may be included in an amount of 1 wt% to 30 wt%, preferably 3 wt% or greater, 5 wt% or greater, 7 wt% or greater, or 10 wt% or greater, and may also be included in an amount of 25 wt% or less, 20 wt% or less, or 15 wt% or less, with respect to a total weight of the electrode composite layer.

## Battery box

In another aspect, a battery box including a plurality of the secondary batteries is provided. The battery box may include a plurality of the secondary batteries and a packaging accommodating the plurality of the secondary batteries. In this case, the battery box may be, for example, a battery module or a battery pack.

The secondary battery stably exhibits excellent discharging capacity, output properties, and capacity retention, and thus, are useful for portable devices such as mobile phones, notebook computers, and digital cameras, and in the field of electric cars such as full electric vehicles (FEVs) and hybrid electric vehicles (HEVs).

The battery box may be used as at least one power supply selected from the group consisting of power tools; electric cars including full electric vehicles (FEVs), hybrid electric vehicles (HEVs), and plug-in hybrid electric vehicles (PHEVs); or power storage systems.

According to the present specification, in another aspect, an electrical device including the battery box and included as a power supply may be provided.

## Example

Hereinafter, examples of the present invention will be described in detail in such a manner that it may easily be performed by a person skilled in the art to which the present invention pertains. The present invention may, however, be embodied in many different forms, and is not limited to examples set forth herein.

### Example 1-1

95 parts by weight of lithium iron phosphate ($LiFePO_4$), 3 parts by weight of carbon nanotubes, and 2 parts by weight of polyvinylidene difluoride (PVDF) were mixed in an N-methyl pyrrolidone solvent to prepare a slurry, and then the slurry was applied to an aluminum foil current collector using a slot die coater. Thereafter, the slurry applied on the current collector was dried at 130°C to manufacture an electrode.

In Examples 1-2 to 1-8 and Comparative Examples 1-1 to 1-6, respective electrodes were manufactured using positive electrode active materials and conductive materials having the physical properties listed in Table 1 below, applying the contents and loading amounts specified, and in Examples 2-1 to 2-4 and Comparative Examples 2-1 to 2-5, respective electrodes were manufactured by applying the physical properties, contents and loading amounts listed in Table 2 below.

[Table 1]

| | Active material | | | Conductive material | | | | A |
|---|---|---|---|---|---|---|---|---|
| | Content (wt%) | Specific surface area ($m^2/g$) | Loading amount ($mg/cm^2$) | Type | Content (wt%) | Specific surface area ($m^2/g$) | $D_{50}$ ($\mu m$) | |
| Example 1-1 | 95 | 20 | 20 | CNT | 3 | 100 | 1 | 0.79 |
| Example 1-2 | 93 | 20 | 20 | CNT | 5 | 100 | 1 | 1.34 |
| Example 1-3 | 97 | 20 | 20 | CNT | 1 | 200 | 2 | 1.03 |
| Example 1-4 | 95 | 20 | 20 | CNT | 3 | 200 | 2 | 3.16 |
| Example 1-5 | 93 | 20 | 20 | CNT | 5 | 200 | 2 | 5.38 |
| Example 1-6 | 93 | 25 | 20 | CNT | 5 | 100 | 1 | 1.08 |
| Example 1-7 | 91 | 20 | 20 | CNT | 7 | 200 | 2 | 7.69 |
| Comparative Example 1-1 | 97 | 20 | 20 | CB | 1 | 300 | 0.05 | 0.04 |
| Comparative Example 1-2 | 95 | 20 | 20 | CB | 3 | 300 | 0.05 | 0.12 |
| Comparative Example 1-3 | 93 | 20 | 20 | CB | 5 | 300 | 0.05 | 0.20 |
| Comparative Example 1-4 | 97 | 20 | 20 | CNT | 1 | 100 | 1 | 0.26 |
| Comparative Example 1-5 | 95 | 25 | 20 | CNT | 3 | 100 | 1 | 0.63 |
| Comparative Example 1-6 | 95 | 60 | 20 | CNT | 3 | 100 | 1 | 0.26 |

[Table 2]

| | Active material | | | Conductive material | | | | A |
|---|---|---|---|---|---|---|---|---|
| | Content (wt%) | Specific surface area ($m^2/g$) | Loading amount ($mg/cm^2$) | Type | Content (wt%) | Specific surface area ($m^2/g$) | $D_{50}$ ($\mu m$) | |
| Example 2-1 | 93 | 20 | 24 | CNT | 5 | 100 | 1 | 1.12 |
| Example 2-2 | 97 | 20 | 24 | CNT | 1 | 200 | 2 | 0.86 |
| Example 2-3 | 95 | 20 | 24 | CNT | 3 | 200 | 2 | 2.63 |
| Example 2-4 | 93 | 20 | 24 | CNT | 5 | 200 | 2 | 4.48 |
| Comparative Example 2-1 | 97 | 20 | 24 | CNT | 1 | 100 | 1 | 0.21 |
| Comparative Example 2-2 | 95 | 20 | 24 | CNT | 3 | 100 | 1 | 0.66 |
| Comparative Example 2-3 | 97 | 20 | 24 | CB | 1 | 300 | 0.05 | 0.03 |
| Comparative Example 2-4 | 95 | 20 | 24 | CB | 3 | 300 | 0.05 | 0.10 |
| Comparative Example 2-5 | 93 | 20 | 24 | CB | 5 | 300 | 0.05 | 0.17 |

The particle diameter and specific surface area of the positive electrode active material and the conductive material may be measured by the following methods. 1) $D_{50}$ ($\mu m$) was measured in a way that the conductive material dispersed in N-methylpyrrolidone was introduced into a laser diffraction particle size measurement instrument (Microtrac MT 3000) and irradiated with ultrasonic waves having a frequency of about 28 kHz and an output of 60 W to obtain a volume accumulated particle size distribution graph, and the particle size at 50% of the volume accumulation is calculated.

2) Specific surface area ($m^2/g$) was measured through a BET method, and was calculated from an amount of nitrogen gas adsorbed at a liquid nitrogen temperature (77 K) using BELSORP-mino II from BEL JAPAN, INC.

## Experimental Example 1: Evaluation of electrode surface characteristics

The surfaces of the positive electrode manufactured in Examples and Comparative Examples were visually observed to determine the presence of cracks.

## Experimental Example 2: Evaluation of battery performance

**1) Manufacture of secondary battery:** A porous polyethylene separator was placed between the positive electrode and the negative electrode from Examples and Comparative Examples to prepare an electrode assembly, and the electrode assembly was placed inside a battery case. Thereafter, an electrolyte solution was injected to prepare a secondary battery.

In this case, the electrolyte solution was prepared by dissolving 1 M $LiPF_6$ in an organic solvent with a volume ratio of ethylene carbonate/ethyl methyl carbonate/diethyl carbonate of 3:4:4, and the negative electrode was prepared as follows.

The negative electrode was prepared by adding artificial graphite as a graphite-based active material, carbon black as a conductive material, and CMC:SBR as a binder to distilled water at a weight ratio of 95.6:1.0:1.1:2.3 to prepare a negative electrode slurry having a solid content concentration of 45 wt%, and in this case, the conductive material and the binder were dispersed in water using a homogeneous mixer at 2,500 rpm for 30 minutes, and then the negative electrode active material was added and dispersed at 2,500 rpm for 30 minutes to prepare the negative electrode slurry.

The negative electrode slurry was applied onto a copper current collector (thickness: 8 μm) with a loading amount of 10.0 $mg/cm^2$, as a negative electrode current collector, and then roll pressed and dried in a vacuum oven at 130°C for 10 hours to prepare a negative electrode.

The secondary battery was charged up to 4.2 V at a C-rate of 0.1 C and then discharged up to 2.5 V to perform an activation process.

**2) Initial charge/discharge capacity (mAh):** Charged in CCCV mode up to 4.2 V at a C-rate of 0.33 C (cut-off 0.05 C), and discharged to 2.5 V at 0.33 C. The charging/discharging was performed three times each, and the capacity at the third discharge to 2.5 V at 0.33 C was measured as an initial capacity.

**3) Battery resistance (mΩ):** The secondary battery was charged and discharged and then fully charged and discharged to measure battery resistance (10 second resistance) by applying a 2.5 C pulse current for a certain period of time according to SOC changes.

[Table 3]

| | A | Presence of electrode cracks | Battery resistance (mΩ) | Initial capacity (mAh) |
|---|---|---|---|---|
| Example 1-1 | 0.79 | X | 1. 45 | 49.4 |
| Example 1-2 | 1.34 | X | 1.35 | 48.0 |
| Example 1-3 | 1.03 | X | 1. 82 | 51.5 |
| Example 1-4 | 3.16 | X | 1.28 | 49.8 |
| Example 1-5 | 5.38 | X | 1.20 | 48.5 |
| Example 1-6 | 1.08 | X | 1.53 | 48.7 |
| Example 1-7 | 7.69 | X | 1.18 | 47.2 |
| Comparative Example 1-1 | 0.04 | O | 2.31 | 49.8 |
| Comparative Example 1-2 | 0.12 | O | 1.58 | 49.2 |
| Comparative Example 1-3 | 0.20 | O | 1.37 | 47.8 |
| Comparative Example 1-4 | 0.26 | O | 2.12 | 50.1 |
| Comparative Example 1-5 | 0.63 | O | 1.77 | 49.8 |
| Comparative Example 1-6 | 0.26 | O | 1.77 | 49.8 |

[Table 4]

| | A | Presence of electrode cracks | Battery resistance (mΩ) | Initial capacity (mAh) |
|---|---|---|---|---|
| Example 2-1 | 1.12 | X | 1. 45 | 58.2 |
| Example 2-2 | 0.86 | X | 1.92 | 60.8 |
| Example 2-3 | 2.63 | X | 1.45 | 60.3 |
| Example 2-4 | 4.48 | X | 1.39 | 59.1 |
| Comparative Examples 2-1 | 0.21 | O | 2.33 | 60.5 |
| Comparative Example 2-2 | 0.66 | O | 1.51 | 60.1 |
| Comparative Example 2-3 | 0.03 | O | 2.59 | 60.2 |
| Comparative Example 2-4 | 0.10 | O | 1.57 | 59.8 |
| Comparative Example 2-5 | 0.17 | O | 1.50 | 58.0 |

Referring to Tables 3 and 4 above, it is seen that Examples 1-1 to 1-7 and Examples 2-1 to 2-4, in which the value of A was controlled to be 0.7 $cm^2\mu m/mg$ or greater by adjusting the content in consideration of the loading amount and specific surface area of the electrode active material and the average particle diameter and specific surface area of the conductive material, had no cracks after electrode manufacturing, and it is seen that high capacity was achievable while the battery resistance was generally low. Conversely, Comparative Examples 1-1 to 1-3 used conductive materials having a large specific surface area because the average particle diameter of the conductive materials was small, but despite adjusting the content relative to the active material, the value of A was less than 0.7 $cm^2\mu m/mg$, resulting in cracks in the electrode. In addition, Comparative Example 1-4 was designed to examine the effects of average particle diameter and specific surface area when a small amount of conductive material was added. Compared to Example 1-3 in which the same amount was applied, it is seen that Comparative Example 1-4 showed crack formation in the electrode and high battery resistance. This confirms the necessity of controlling the specific surface area and average particle diameter of the conductive material relative to the content. In addition, Comparative Examples 1-5 and 1-6, which varied the specific surface area of the active material, show that using an active material having a large specific surface area without subsequently controlling the specific surface area and average particle diameter of the conductive material results in both crack formation in the electrode and increased battery resistance. In addition, as for Example 1-7 and Comparative Example 1-5, it is seen that the occurrence of cracks in the electrode differed despite controlling only the content under otherwise identical conditions. This confirms that the content and specific surface area of the applied active material and conductive material are closely correlated and impact appearance characteristics and battery characteristics of the electrode, and this is found to be achievable through the control of the value of A. In addition, it is seen that in Examples 2-1 to 2-4 and Comparative Examples 2-1 to 2-5, which were tested with an increased loading amount of active material, the occurrence of cracks in the electrode also differed depending on whether the value of A satisfied 0.7 $cm^2\mu m/mg$ or greater, and in terms of the tendency regarding the necessity of controlling the specific surface area and average particle diameter when the conductive material is included in a small amount, and the difficulty in forming a conductive network even when a conductive material having a large specific surface area is applied if the average particle diameter of the conductive material is too small, Examples 2-1 to 2-4 and Comparative Examples 2-1 to 2-5 showed the same tendency results as Examples 1-1 to 1-7 and Comparative Examples 1-1 to 1-6.

## Claims

1. An electrode comprising an electrode active material layer comprising an electrode active material, a conductive material, and a binder,

   wherein the electrode active material layer has an A, defined by Equation 1 below, of 0.70 $cm^2\mu m/mg$ or greater, and
   the electrode active material has a specific surface area of 10 $m^2/g$ to 50 $m^2/g$,

   [Equation 1]

$$A = [(W_C \times S_C \times D_C) / (W_{AM} \times S_{AM} \times L_{AM})] \times 100$$

wherein in Equation 1 above, $W_C$ and $W_{AM}$ are respective weight percentages (wt%) of the conductive material and the electrode active material, with respect to a total content of the electrode active material, the conductive material, and the binder, $S_C$ and $S_{AM}$ are respective BET specific surface areas ($m^2/g$) of the conductive material and the electrode active material, $D_C$ is an average particle diameter ($\mu m$) of the conductive material, and $L_{AM}$ is a loading amount ($mg/cm^2$) of the electrode active material.

**2.** The electrode of claim 1, wherein the A is 0.70 $cm^2\mu m/mg$ to 8.00 $cm^2\mu m/mg$.

**3.** The electrode of claim 1, wherein the conductive material has a specific surface area of 50 $m^2/g$ to 250 $m^2/g$.

**4.** The electrode of claim 1, wherein the conductive material has an average particle diameter $D_{50}$ of 0.1 $\mu m$ to 4.0 $\mu m$.

**5.** The electrode of claim 1, wherein the conductive material comprises a point-type conductive material.

**6.** The electrode of claim 1, wherein the electrode active material comprises at least one selected from the group consisting of a lithium manganese-based oxide, a lithium cobalt-based oxide, a lithium nickel-based oxide, a lithium composite transition metal oxide, and a lithium iron phosphate-based compound.

**7.** The electrode of claim 1, wherein the electrode active material comprises a lithium iron phosphate-based compound.

**8.** The electrode of claim 1, wherein the electrode active material is provided in an amount of 93.0 wt% to 99.0 wt% with respect to a total weight of the electrode active material layer.

**9.** The electrode of claim 1, wherein the conductive material is provided in an amount of 0.5 wt% to 5.0 wt% with respect to a total weight of the electrode active material layer.

**10.** A secondary battery comprising the electrode of claim 1.

**11.** The secondary battery of claim 10, wherein the electrode is a positive electrode.

## INTERNATIONAL SEARCH REPORT

International application No. **PCT/KR2025/012059**

**A. CLASSIFICATION OF SUBJECT MATTER**

**H01M 4/13**(2010.01)i; **H01M 4/62**(2006.01)i; **H01M 4/131**(2010.01)i; **H01M 4/136**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/13(2010.01); H01M 10/052(2010.01); H01M 4/02(2006.01); H01M 4/131(2010.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 이차전지 (secondary battery), 양극 활물질 (cathode active material), 도전재 (conductive additive), 바인더 (binder), 비표면적 (specific surface area, BET), 입경 (particle size), 중량 (weight), 로딩량 (loading amount), 리튬 인산철계 화합물 (lithium iron phosphate-based compound)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-243529 A (HITACHI VEHICLE ENERGY LTD.) 09 October 2008 (2008-10-09)<br>claims 1-3, 7, 8; paragraphs [0010], [0019]-[0021], [0027], [0030], [0035] | 1-11 |
| Y | JP 2011-129442 A (HITACHI LTD.) 30 June 2011 (2011-06-30)<br>claim 1; paragraphs [0037], [0046], [0078], [0079], [0086]-[0088], [0104], [0152] | 1-11 |
| A | JP 2016-173875 A (NISSAN MOTOR CO., LTD.) 29 September 2016 (2016-09-29)<br>abstract; claims 1-3 | 1-11 |
| A | KR 10-2023-0051104 A (LG ENERGY SOLUTION, LTD.) 17 April 2023 (2023-04-17)<br>abstract; claims 1-13 | 1-11 |
| A | JP 2019-050098 A (SANYO ELECTRIC CO., LTD.) 28 March 2019 (2019-03-28)<br>abstract; claims 1-6 | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 November 2025** | **14 November 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2025/012059**

| Patent document cited in search report | | | Publication date (day/month/year) | Patent family member(s) | | | Publication date (day/month/year) |
|---|---|---|---|---|---|---|---|
| JP | 2008-243529 | A | 09 October 2008 | None | | | |
| JP | 2011-129442 | A | 30 June 2011 | JP | 5401296 | B2 | 29 January 2014 |
| JP | 2016-173875 | A | 29 September 2016 | WO | 2015-015894 | A1 | 05 February 2015 |
| KR | 10-2023-0051104 | A | 17 April 2023 | CN | 117957666 | A | 30 April 2024 |
| | | | | EP | 4394917 | A1 | 03 July 2024 |
| | | | | EP | 4394917 | A4 | 24 September 2025 |
| | | | | JP | 2024-536293 | A | 04 October 2024 |
| | | | | KR | 10-2860531 | B1 | 16 September 2025 |
| | | | | US | 2024-0387818 | A1 | 21 November 2024 |
| | | | | WO | 2023-059152 | A1 | 13 April 2023 |
| JP | 2019-050098 | A | 28 March 2019 | JP | 7011427 | B2 | 10 February 2022 |

Form PCT/ISA/210 (patent family annex) (July 2022)